# EUROPÄISCHE PATENTANMELDUNG

(11) **EP 2 575 239 A2**
(43) Veröffentlichungstag der Anmeldung: **03.04.2013**
(21) Anmeldenummer: 12184973.1
(22) Anmeldetag: 19.09.2012
(51) Int. Cl.: H02K 5/167

(54) **Elektrische Maschine und Verfahren zur Herstellung einer elektrischen Maschine**

(30) Priorität: 30.09.2011 DE 102011083914
(71) Anmelder: ROBERT BOSCH GMBH, 70442 Stuttgart (DE)
(72) Erfinder: Hirning, Reiner, 71735 Eberdingen-Hochdorf (DE); Hallas, Patrick, 71640 Ludwigsburg (DE)

(57) **Zusammenfassung**

Der Gegenstand der vorliegenden Erfindung betrifft eine elektrische Maschine (100), insbesondere eine Andrehvorrichtung wie ein Starter, zum Andrehen einer Brennkraftmaschine, umfassend eine Kommutator-Anker-Einheit mit einer daraus in axiale Richtung hervorragenden Ankerwelle (17), die an ihrem einen Ende (17a) mittels eines Kommutatorlagers schwimmend gelagert ist, wobei zwischen Kommutator-Anker-Einheit und Kommutatorlager eine in Axialrichtung (A) veränderbare Axialsicherungseinrichtung (A) vorgesehen ist, um ein Axialspiel der Ankerwelle (17) zu verringern, und ein Verfahren zur Herstellung der elektrischen Maschine (100).

## Beschreibung

Die Erfindung betrifft eine elektrische Maschine, insbesondere eine Andrehvorrichtung wie einen Starter, zum Andrehen einer Brennkraftmaschine, nach dem Oberbegriff des Anspruchs 1.

Zudem betrifft die Erfindung ein Verfahren zur Herstellung einer elektrischen Maschine, insbesondere einer Andrehvorrichtung, zum Andrehen einer Brennkraftmaschine, nach dem Oberbegriff des Anspruchs 10.

### Stand der Technik

Die Erfindung geht aus von einem System mit einem Starter oder Startermotor nach Gattung der unabhängigen Ansprüche.

Gegenstand der vorliegenden Erfindung sind Starter und Anlasser für Fahrzeuge mit Verbrennungsmotoren, die eine elektrische Maschine mit Anker und Kommutator aufweisen, wobei der Anker eine Ankerwelle mit entsprechender Ankerlagerung aufweist.

Aus dem Stand der Technik sind Anlasser mit einem Anlasserrelais für Fahrzeuge mit Verbrennungsmotoren bekannt, die in der Regel einen Gleichstromelektromotor zum Antreiben des Verbrennungsmotors umfassen.

In derartigen Startern oder Startermotoren ist für ein Einspuren oder einen Hub in den Zahnkranz beispielsweise ein Relais-Gabelhebelsystem mit einem entsprechenden Relais verantwortlich. Bei einem Hub, auch als Distanz bezeichnet, oder genauer einer Einspurbewegung zieht ein Relais einen Gabelhebel nach hinten. Dies erfolgt durch eine entsprechende Bestromung des Relais. Bei einer Bestromung wird eine mit einem magnetischen Kern zusammenwirkende Schaltachse axial in Richtung eines Kontaktes hin oder von diesem weg bewegt. Derartige Starter weisen einen Elektromotor auf. Dieser Elektromotor weist einen Stator auf, der als Magnet ausgebildet ist. Weiter weist der Elektromotor einen Rotor auf. Der Rotor weist einen aus Spule mit Eisenkern ausgebildeten Anker auf, der drehbar in einem Magnetfeld zwischen Polschuhen des Stators gelagert ist. Eine Stromzuführung für den Anker erfolgt über einen segmentierten Kommutator und Schleifkontakte, sogenannte Kommutatorbürsten. Bei einer Bestromung des Rotors entsteht auch hier ein Magnetfeld, welches in Wechselwirkung mit dem Magnetfeld des Stators steht. In derartigen Anlassern kommen Ankerwellen zum Einsatz, die schwimmend gelagert sind. Um ein Axiallängsspiel der Ankerwellen zu begrenzen, sind Axialsicherungseinrichtungen bekannt. Derartige Axialsicherungseinrichtungen umfassen eine auf der Ankerwelle sitzende Sicherungsscheibe. Der Sitz der Sicherungsscheibe in der Nut ist mit Toleranzen behaftet. Aufgrund einer Toleranzkette mehrerer Einzelteile in Bezug auf einen Anker addieren sich die Einzeltoleranzen bei der Montage des Anlassers, sodass die Ankerwelle ein Axiallängsspiel aufweisen kann, welches einige 1/10 Millimeter und mehr betragen kann.

Aus der DE 29704299 U1 ist eine Andrehvorrichtung für Brennkraftmaschinen mit einem Andrehmotor bekannt, dessen Antriebswelle über ein Vorgelege mit einer Abtriebswelle in Wirkverbindung steht, die Teil eines Einspurgetriebes mit Freilauf und Andrehritzel ist, das auf der Abtriebswelle axial verschiebbar angeordnet ist und durch axiales Verschieben mit dem Zahnkranz des Andrehgetriebes der Brennkraftmaschine in Eingriff gebracht wird, wobei auf der Abtriebswelle hinter dem Andrehritzel - bezogen auf die Richtung zum Andrehmotor - eine Anschlagvorrichtung für das Andrehritzel im Endbereich seiner Bewegung beim Eingriff mit dem Zahnkranz angeordnet ist, wobei die Anschlagvorrichtung ein axial wirksames Federelement aufweist.

### Offenbarung der Erfindung

Die erfindungsgemäße elektrische Maschine und das erfindungsgemäße Verfahren mit den Merkmalen des entsprechenden Hauptanspruches oder nebengeordneten Anspruches haben dem Stand der Technik gegenüber den Vorteil, dass bei einer elektrischen Maschine, insbesondere eine Andrehvorrichtung wie ein Starter, zum Andrehen einer Brennkraftmaschine, umfassend eine Kommutator-Anker-Einheit mit einer daraus in axiale Richtung hervorragenden Ankerwelle, die an ihrem einen Ende mittels eines Kommutatorlagers schwimmend gelagert ist, wobei zwischen Kommutator-Anker-Einheit und Kommutatorlager eine in Axialrichtung veränderbare Axialsicherungseinrichtung vorgesehen ist, das Axialspiel der Ankerwelle durch die Veränderung der Axialsicherungseinrichtung minimiert werden kann. Da die Axialsicherungseinrichtung unabhängig von einem Axiallängsspiel der Ankerwelle ist und unabhängig dazu in Axialrichtung veränderbar ist, kann das Axialankerlängsspiel von einigen 1/10 Millimeter auf wenige 1/100 Millimeter reduziert werden kann. Damit wird ein Verschleiß eines Kommutatorsystems der Andrehvorrichtung und speziell der Kohlebürsten deutlich reduziert. Das Axiallängsspiel oder Ankerlängsspiel wird nicht mehr durch die Toleranzen mehrerer, noch dazu relativ ungenau gefertigter Bauteile definiert. Die Veränderung der Axialsicherungseinrichtung in axiale Richtung erfolgt vorzugsweise reversibel, insbesondere elastisch. Hierdurch ist eine Anpassung an veränderte Längsspiele möglich.

Die elektrische Maschine umfasst bevorzugt einen Elektromotor mit Rotor und Stator. Insbesondere ist die elektrische Maschine als Andrehvorrichtung für eine Brennkraftmaschine als sogenannter Starter oder Startermotor ausgebildet. Diese umfasst eine Kommutator-Anker-Einheit mit einem Kommutator mit Kommutatorbürsten. Die Kommutatorbürsten sind in einem Bürstenhalter gehalten. Weiter umfasst die Kommutator-Anker-Einheit einen Anker mit einer drehbaren Ankerwelle. Über den Kommutator wird dem Anker Strom zugeführt und die Ankerwelle angetrieben.

Durch die in den abhängigen Ansprüchen aufgeführten Maßnahmen sind vorteilhafte Weiterbildungen und Verbesserungen der in den unabhängigen und nebengeordneten Ansprüchen vorgegebenen Vorrichtungen möglich.

In einer Ausführungsform ist vorgesehen, dass die Axialsicherungseinrichtung eine Feder-Speicher-Einrichtung umfasst, welche in axiale Richtung elastisch verformbar ist. Der Kommutator ist in der elektrischen Maschine mittels des Kommutatorlagers gelagert. Dabei ist das Kommutatorlager an einer Seite des Kommutators beispielsweise als Teil eines Gehäusedeckels oder dergleichen ausgebildet. Zwischen dem Kommutator und dem Gehäusedeckel ist die Feder-Speicher-Einrichtung angeordnet.

Eine weitere Ausführungsform sieht vor, dass die Feder-Speicher-Einrichtung als Ring mit federnden Elementen, insbesondere als Federring, ausgebildet ist. In einer kleinbauenden Ausführungsform umfasst die Axialsicherungseinrichtung einen Federring. Dieser ist in der Ringebene wellenförmig gebogen. In einer anderen Ausführungsform ist die Axialsicherungseinrichtung als Ring mit davon aus der Ringebene abstehenden Federelementen wie Federarmen und dergleichen ausgebildet.

Eine weitere Ausführungsform der vorliegenden Erfindung sieht vor, dass die Axialsicherungseinrichtung mindestens eine Anlaufscheibe benachbart zu der Feder-Speicher-Einrichtung vorgesehen ist. Die Anlaufscheibe ist kommutatorseitig oder deckelseitig, das heißt auf jeder der beiden Seiten der Feder-Speicher-Einrichtung vorsehbar. Auch sind beispielsweise mehrere Scheiben auf der einen oder der anderen Seite der Feder-Speicher-Einheit vorsehbar, beispielsweise um eine Breite der Axialsicherungseinrichtung einzustellen.

Noch eine andere Ausführungsform sieht vor, dass die Axialsicherungseinrichtung benachbart zu beiden Seiten der Feder-Speicher-Einheit mindestens je eine Anlaufscheibe aufweist, sodass die Feder-Speicher-Einrichtung sandwichartig zwischen den Anlaufscheiben angeordnet ist. Auf diese Weise sind die Anlageflächen an benachbarten Bauteilen durch die Anlaufscheiben realisiert. Unterschiede in Radialrichtung oder Umfangsrichtung der Ankerwelle bzw. der angrenzenden Bauteile sind so ausgleichbar. Zudem ist so auf einfache Weise eine kompakte Baueinheit der Axialsicherungseinrichtung gewährleistet.

Zudem ist in einer Ausführungsform vorgesehen, dass die Ankerwelle im Bereich der Feder-Speicher-Einrichtung nutfrei ausgebildet. Auf diese Weise ist ein Bearbeitungsschritt eingespart. Die axiale Festlegung erfolgt über den Abstand zwischen Kommutator-Anker-Einheit und dem Kommutatorlager bzw. dem Deckel bzw. der Breite der Axialsicherungseinrichtung, das heißt der axialen Erstreckung von Feder-Speichereinheit und Anlaufscheibe(n).

Damit es im Bereich zwischen dem Anlaufscheibenteil und der Feder-Speicher-Einheit zu möglichst geringem Abrieb und Energieverlusten kommt, sieht eine Ausführungsform vor, dass reibungsreduzierende Mittel an den Anlaufscheiben und/oder der Feder-Speicher-Einheit vorgesehen sind. Diese umfassen in einer Ausführungsform beispielsweise gleitfähige Kunststoffe wie PTFE, PFA etc., Sintermetalle, Beschichtungen, zum Beispiel mit Lagerwerkstoff, Gleitlack, chemisch Nickel und dergleichen.

In einer weiteren Ausführungsform ist vorgesehen, dass die Feder-Speicher-Einheit und/oder die Anlaufscheibe(n) derart umfänglich oder radial über die Ankerwelle hinausragt, dass diese in axialer Richtung zwischen Kommutator-Ankereinheit und dem Kommutatorlager angeordnet ist/sind. Hierdurch ist deren Position in axiale Richtung durch den Abstand zwischen Kommutatorlager und Kommutator-Anker-Einheit bzw. der Breite der Axialsicherungseinrichtung, genauer der Breite der Feder-Speicher-Einheit und der Anlaufscheiben, festlegbar.

Wiederum eine weitere Ausführung sieht vor, dass die Axialsicherungseinrichtung in Axialrichtung mindestens eine Breite aufweist, die einem Abstand zwischen Kommutator-Ankereinheit und Kommutatorlager entspricht und bevorzugt im ursprünglichen Zustand breiter ist als der Abstand zwischen Kommutator-Ankereinheit und Kommutatorlager. Im nicht vorgespannten Zustand weist die die Feder-Speicher-Einheit umfassende Axialsicherungseinrichtung eine Breite auf, die in etwa dem Abstand zwischen Kommutator-Ankereinheit und Kommutatorlager entspricht. Bevorzugt ist die Breite größer als der Abstand, sodass nach einem Zusammenbau die Axialsicherungseinrichtung zumindest etwas vorgespannt ist. Das Verhältnis von Breite und Abstand ist je nach Anwendungsfall einstellbar. Beispielhafte Werte für mögliche Verhältnisse von Breite zu Abstand für eine Vorspannung liegen in einem Bereich von größer gleich 1 bis etwa kleiner gleich 1,5, bevorzugt kleiner gleich 1,4 und weiter bevorzugt von kleiner gleich 1,3. Entsprechend sind beliebige Verhältnis denkbar, beispielsweise etwa von 1; 1,025; 1,05; 1,075; 1,1; 1,15; 1,25; 1,3; 1,35; 1,4; 1,45; 1,5 und dergleichen. Der ursprüngliche Zustand entspricht dabei einem nicht vorgespannten Zustand.

Noch eine andere Ausführungsform der vorliegenden Erfindung sieht vor, dass die Axialsicherungseinrichtung beabstandet zu der Feder-Speicher-Einrichtung, insbesondere an einer anderen Seite des Kommutatorlagers, ein Axialsicherungselement, insbesondere eine Sicherungsscheibe aufweist. Auf diese Weise ist zusätzlich eine Sicherung vorgesehen, die ein Axiallängsspiel reduziert.

Das erfindungsgemäße Verfahren mit den Merkmalen des entsprechenden Hauptanspruches oder nebengeordneten Anspruches hat dem Stand der Technik gegenüber den Vorteil, dass bei der Herstellung einer erfindungsgemäßen elektrischen Maschine, insbesondere einer erfindungsgemäßen Andrehvorrichtung, zum Andrehen einer Brennkraftmaschine, umfassend eine Kommutator-Anker-Einheit mit einer daraus in axiale Richtung hervorragenden Ankerwelle, die an ihrem einen Ende mittels eines Kommutatorlagers schwimmend gelagert ist, wobei vor dem Einsetzen der Ankerwelle in das Kommutatorlager eine in Axialrichtung veränderbare Axialsicherungseinrichtung auf der Ankerwelle diese umgebend positioniert wird, im zusammengebauten Zustand ein Axialspiel der Ankerwelle verringert ist. Es ist aufgrund der veränderbaren Eigenschaften kein aufwendiges Einstellen der Axialsicherungseinrichtung erforderlich. Durch die veränderbaren Eigenschaften erfolgt eine Autojustierung.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: in einer Querschnittsansicht eine als Andrehvorrichtung ausgebildete elektrische Maschine,
- Figur 2: perspektivisch in einer Explosionsansicht einen Ausschnitt einer weiteren Ausführungsform der elektrischen Maschine,
- Figur 3a, b: einen Ausschnitt der Andrehvorrichtung nach Fig. 2 im betriebsbereiten Zustand in einer Querschnittsansicht und einer perspektivischen Ansicht,
- Fig. 4: in einer perspektivischen Ansicht eine Ausführungsform einer Axialsicherungseinrichtung und
- Fig. 5: in einer perspektivischen Ansicht eine andere Ausführungsform einer Axialsicherungseinrichtung,

### Beschreibung des Ausführungsbeispiels

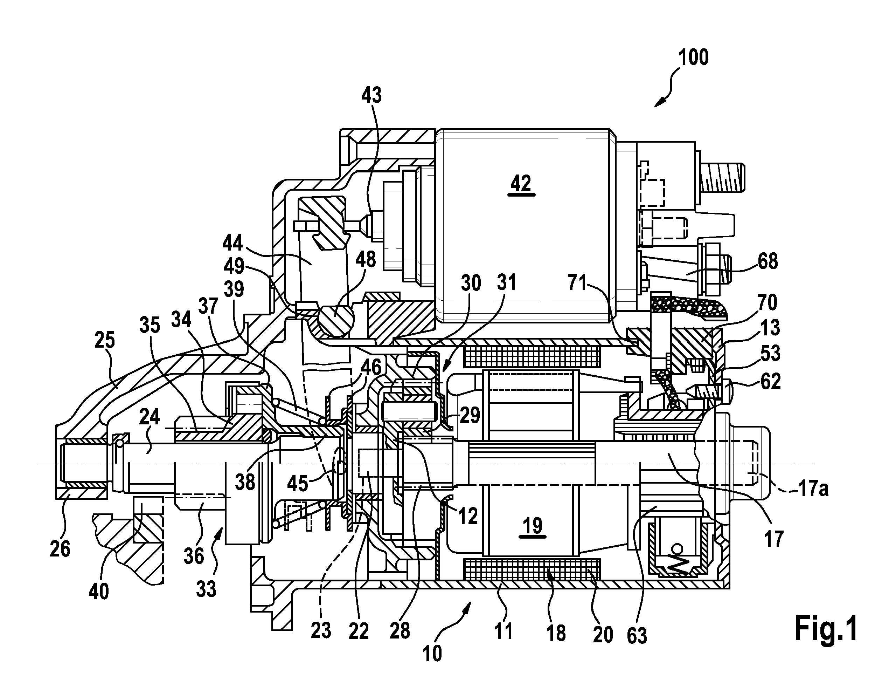

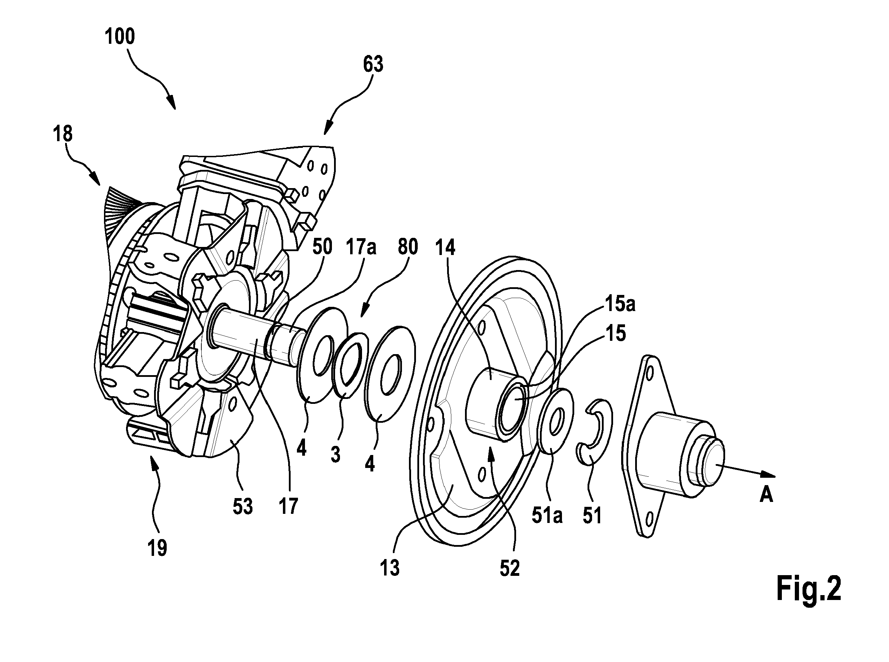

Fig. 1 zeigt in einer Querschnittsansicht eine als Andrehvorrichtung ausgebildete elektrische Maschine 100 einer Verbrennungskraftmaschine mit Relais 42, auch als Schalt- oder Einrückrelais ausgeführt. Ein Gehäuse 10 der elektrischen Maschine 100 umfasst einen zylindrischen Gehäuseteil 11 und einen Deckel 13, die durch nicht weiter dargestellte Schrauben miteinander verbunden sind. Das zylindrische Gehäuseteil 11 ist hinten durch den Deckel 13 verschlossen, in dessen Mittelteil eine nach außen gerichtete, geschlossene Nabe 14 angeformt ist (siehe Fig. 2). In der Nabe 14 befindet sich eine Lagerstelle 15 (siehe Fig. 2), in welcher das hintere Ende 17a der Antriebswelle 17 eines elektrischen Andrehmotors 18 gelagert ist, dessen Anker mit 19 bezeichnet ist. Radial außerhalb des Ankers 19 befinden sich an der Wand des Gehäuseteils 11 mehrere (Permanent-)Magnete 20 des Andrehmotors 18. Das vordere Ende der Antriebswelle 17 ist mit einem im Durchmesser reduzierten Endabschnitt 22 in einer achsgleich verlaufenden, nicht weiter dargestellten Sackbohrung 23 einer Abtriebswelle 24 gelagert. Das andere Ende der Abtriebswelle 24 ist in einem das Gehäuseteil 11 verschließenden Lagerschild 25 und einer an diesem angeformten Nabe 26 gelagert. Die Antriebswelle 17 hat nahe ihrem dem Lagerschild 25 zugewandten Ende eine Verzahnung 28 (Sonnenrad), in welche Planetenräder 29 eingreifen, die auch mit einem außenliegenden, feststehenden Hohlrad 30 eines Planetengetriebes 31 kämmen (= Vorgelege). Ein Planetenträger 12 treibt die Abtriebswelle 24 an, auf welcher ein Freilauf 33 angeordnet ist, dessen Innenring 34 einen Fortsatz 35 (Ritzel) aufweist, an dem eine Außenverzahnung 36 ausgebildet ist. Der Außenring 37 des Freilaufs 33 ist über ein Steilgewinde 38 mit der Abtriebswelle 24 verbunden. Auf ihn wirkt eine sogenannte Einspurfeder 39 ein. Durch axiales Verschieben des Freilaufs 33 kann die Außenverzahnung 36 mit einem Zahnkranz 40 einer Brennkraftmaschine zwecks des Startvorgangs in Eingriff gebracht werden. Dies geschieht mit Hilfe eines (Einrück-) Relais 42, in welchem beim Einschalten eines Stroms ein Magnetanker über einen Fortsatz 43 einen Hebel 44 verschwenkt, der über eine Kulisse 45, die zwischen Scheiben 46 liegt, den Freilauf 33 nach links verschiebt. Der Hebel 44 ist zweiarmig ausgebildet und mittels Zapfen 48, in einem gehäusefesten Lager 49 schwenkbar angeordnet. Auf diesen Vorgang ist nur kurz eingegangen, da nicht erfindungswesentlich. Die Antriebswelle 17 ist nahe ihrem hinteren lagerseitigen Ende 17a mit einer Sicherungsscheibe 51 (siehe Fig. 2) gesichert. Diese ist etwa U-förmig ausgebildet - und liegt einerseits an einem Ende 52 des Deckels 13 an, andererseits an einem Ende 15a der Lagerstelle 15 an (siehe Fig. 2). An dem Deckel 13 liegt eine Bürstenplatte 53, welche mit dem Deckel 13 verschraubt ist. Die Bürstenplatte 53 ist einstückig ausgebildet. An ihr sind insbesondere aus Kunststoff bestehende Bürstenhalter befestigt, in welchen Kohlen angeordnet sind, die sich unter Federdruck an einen Kommutator 63 anlegen, welcher an der Antriebswelle 17 angeordnet ist. Die Kohlen sind über Anschlusslitzen an einen Kabelschuh angeschlossen, der mit einem Kontakt 68 des Einrückrelais 42 verbunden ist. Die Litzen durchdringen eine Dichtung 70, welche im Gehäuseteil 11 in einer Öffnung 71 angeordnet ist. Die Bürstenplatte 53 ist mit Schrauben 62 am Deckel 13 befestigt.

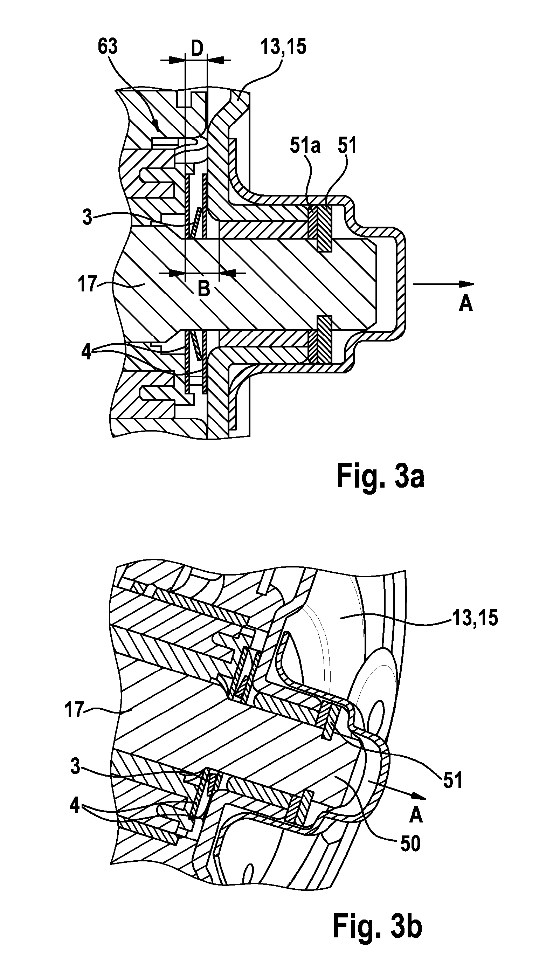

Figur 2 zeigt perspektivisch in einer Explosionsansicht einen Ausschnitt einer weiteren Ausführungsform der elektrischen Maschine 100. Für gleiche oder ähnliche Bauteile werden gleiche Bezugszeichen verwendet. Eine detaillierte Beschreibung bereits beschriebener Bauteile entfällt. In Fig. 2 ist eine in Axialrichtung A veränderbare Axialsicherungseinrichtung 80 dargestellt. Die Axialsicherungseinrichtung 80 ist in Axialrichtung A zwischen der als Kommutatorlager fungierenden Lagerstelle 15 und der Kommutator-Anker-Einheit, genauer dem Kommutator 63 angeordnet. Hierzu umfasst die Axialsicherungseinrichtung 80 eine Feder-Speicher-Einrichtung, die in Axialrichtung A wirksam ist. Die Feder-Speicher-Einrichtung umfasst einen Federring 3, der zwischen zwei Anlaufscheiben 4 sandwichartig angeordnet ist. In dem Bereich, in dem die Axialsicherungseinrichtung 80, genauer der Federring 3 mit den zwei Anlaufscheiben 4 angeordnet ist, ist die Ankerwelle 17 nutfrei ausgebildet. Die Axialsicherungseinrichtung 80 umgibt die Ankerwelle 17 umfänglich und ist so in eine radiale Richtung zu der Ankerwelle 17 innerhalb eines vorbestimmten Spiels festgelegt. Die Federscheibe 3 mit den zwei Anlaufscheiben 4 ist zwischen dem Kommutator 63 und dem Deckel 13 angeordnet. Auf der anderen Seite des Deckels 13 in Axialrichtung A ist als Axialsicherungselement die Sicherungsscheibe 51 angeordnet. Diese sitzt, zusammen mit einem Sicherungsring 51a in einer Ringnut 50 der Ankerwelle 17. Die zusammengesetzte Anordnung ist auch in den Fig. 3a und 3b dargestellt.

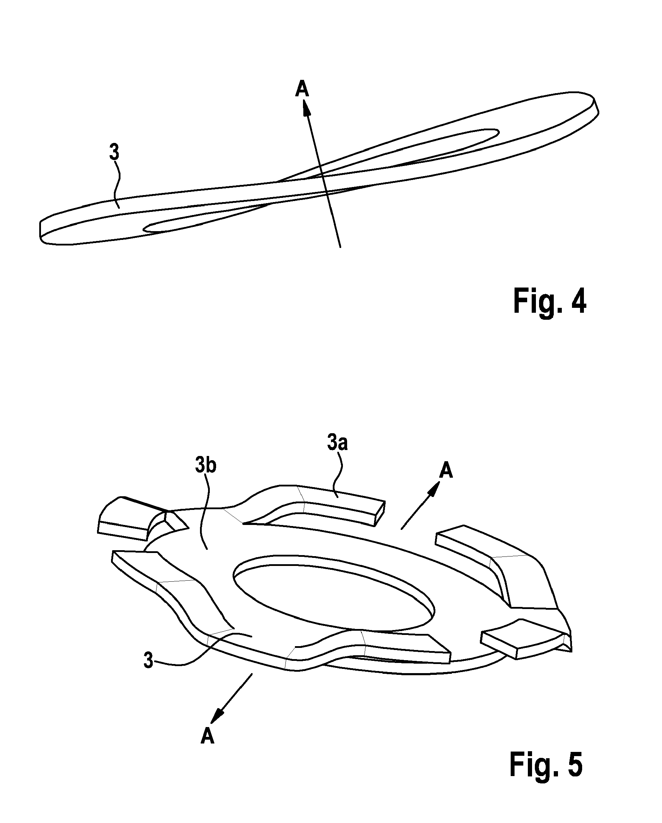

Figur 3a und 3b zeigen einen Ausschnitt der Andrehvorrichtung nach Fig. 2 im betriebsbereiten Zustand in einer Querschnittsansicht und einer perspektivischen Ansicht. Deutlich ist die sandwichartige Anordnung - in Axialrichtung A betrachtet - von Kommutator-Anker-Einheit, erster Anlaufscheibe 4, Federring 3, zweiter Anlaufscheibe 4 und Deckel 13 zu erkennen. Dabei ist eine Breite B der Anlaufscheiben-Federscheibe-Anordnung (hier schematisch eingezeichnet) im entspannten Zustand, das heißt vor einem Zusammenfügen der Andrehvorrichtung breiter als ein Abstand D in Axialrichtung A zwischen Kommutator-Anker-Einheit und Deckel 13. In dem dargestellten zusammengebauten Zustand ist die Anlaufscheiben-Federscheibe-Anordnung zwischen Kommutator-Anker-Einheit und Deckel 13 eingespannt, das heißt, die Federscheibe 3 ist vorgespannt. Die Breite B der vorgespannten Anlaufscheiben-Federscheibe-Anordnung entspricht in diesem Zustand dem Abstand D. Somit ist durch die vorgespannte Federscheibe 3 ein Axialspiel oder Ankerwellenlängsspiel reduziert. Ausführungsformen der Federscheibe 51 sind in Fig. 4 und 5 dargestellt.

Fig. 4 und Fig. 5 zeigen in je einer perspektivischen Ansicht eine Ausführungsform der Axialsicherungseinrichtung 80, genauer der Federscheibe 3. In Fig. 4 ist die Federscheibe 3 als Ring ausgebildet, der aus der Ringebene herausgekrümmt ist und somit aufgrund der so entstehenden Wellenform auch als Wellenscheibe bezeichnet wird. In Fig. 5 ist die Federscheibe 3 als Ring mit Federarmen 3a ausgebildet. Die Federarme 3a ragen von dem Ring in Ringebene ab und realisieren so einen Federweg in Axialrichtung A.

Die Federscheibe 3 nach Fig. 5 weist einen ringförmigen Trägerbereich 3b auf. Von diesem Trägerbereich 3b gehen an dessen radialen Außenseite mehrere Federarme 3a aus. Als Minimalanforderung bezüglich der Federscheibe 3 ist vorzusehen, dass vom Trägerbereich 3b zumindest ein Federarm 3a ausgeht. Dieser zumindest eine Federarm 3a erstreckt sich in peripherer Richtung in Bezug zur Axialrichtung A. Um eine möglichst günstige Ausnutzung des Bauraums für die Federscheibe 3 zu erreichen, erstrecken sich vom Umfang des Trägerbereichs 3b ausgehend an einer Umfangsstelle je zwei Federarme 3a, die voneinander weg weisen. Die Federarme 3a weisen derartig gestaltete Querschnitte auf, dass die Axialkraftbelastung im Wesentlichen gleiche mechanische Spannungen in den Federarmen 3a verursachen. Der Trägerbereich 3b dient dazu, dass die Federscheibe 3 um die Ankerwelle 17 zentriert ist. Ein Durchlass der Federscheibe 3 ist entsprechend an einen Durchmesser der Ankerwelle 17 angepasst. Bevorzugt ist der Durchmesser des Durchlasses bzw. der Durchgangsöffnung der Federscheibe 3 größer als der Außendurchmesser der Ankerwelle 17 in dem entsprechenden Bereich, sodass die Federscheibe 3 lose um die Ankerwelle 17 sitzt. Entsprechend dreht sich die Federschreibe 3 nicht mit der Ankerwelle 17 mit. Durch die sandwichartige Anordnung zwischen den Anlaufscheiben 4, welche drehfest in Bezug auf die Ankerwelle 17 auf der Ankerwelle 17 sitzen und sich somit mit der Ankerwelle 17 mitdrehen, und die damit verbundene Klemmung zwischen den beiden Anlaufscheiben 4, dreht sich die Federscheibe jedoch über eine Reibkraft zwischen den Anlaufscheiben 4 und dem Federring 3 der Federring 3 bei entsprechend großer Reibkraft mit diesen mit.

Für die Federscheibe 3 haben sich verschiedene physikalische Eigenschaften als besonders günstig herausgestellt. Damit über den plastischen Kompressionsweg nur zulässige Axialkrafterhöhungen eintreten, ist vorgesehen, dass die Federkonstante gemäß üblicher Definition zwischen 18 und 70 N/mm beträgt. Des Weiteren hat sich herausgestellt, dass der plastische Bereich der Verformung der Federscheibe 3 günstigerweise nach einem elastischen Kompressionsweg zwischen 2 und 3,5 mm beginnt. Darüber hinaus hat sich ergeben, dass eine Axialkraftänderung DeltaFA in einem plastischen Kompressionsweg zwischen 1,5 und 3,5 mm günstigerweise in einem Bereich von 100 N liegt. Für eine günstige Lebensdauerprognose ist erforderlich, dass die Federscheibe 3 mit einer Axialkraft FA von 350 bis 650 N wirken soll.

## Patentansprüche

1. Elektrische Maschine (100), insbesondere eine Andrehvorrichtung wie ein Starter, zum Andrehen einer Brennkraftmaschine, umfassend eine Kommutator-Anker-Einheit mit einer daraus in axiale Richtung hervorragenden Ankerwelle (17), die an ihrem einen Ende (17a) mittels eines Kommutatorlagers schwimmend gelagert ist, **dadurch gekennzeichnet, dass**
zwischen Kommutator-Anker-Einheit und Kommutatorlager eine in Axialrichtung (A) veränderbare Axialsicherungseinrichtung (A) vorgesehen ist, um ein Axialspiel der Ankerwelle (17) zu verringern.

2. Elektrische Maschine (100) nach Anspruch 1, **dadurch gekennzeichnet, dass** die Axialsicherungseinrichtung (80) eine Feder-Speicher-Einrichtung umfasst, welche in Axialrichtung (A) elastisch verformbar ist.

3. Elektrische Maschine (100) nach Anspruch 1 oder 2, **dadurch gekennzeichnet, dass**
die Feder-Speicher-Einrichtung als Ring mit federnden Elementen, insbesondere als Federring (3), ausgebildet ist.

4. Elektrische Maschine (100) nach Anspruch 1 bis 3, **dadurch gekennzeichnet, dass**
die Axialsicherungseinrichtung (80) mindestens eine Anlaufscheibe (4) benachbart zu der Feder-Speicher-Einrichtung umfasst.

5. Elektrische Maschine (100) nach einem der vorherigen Ansprüche 1 bis 4, **dadurch gekennzeichnet, dass**
die Axialsicherungseinrichtung (80) benachbart zu beiden Seiten der Feder-Speicher-Einheit mindestens je eine Anlaufscheibe (4) aufweist, sodass die Feder-Speicher-Einrichtung sandwichartig zwischen den Anlaufscheiben (4) angeordnet ist.

6. Elektrische Maschine (100) nach einem der vorherigen Ansprüche 1 bis 5, **dadurch gekennzeichnet, dass**
die Ankerwelle (17) im Bereich der Feder-Speicher-Einrichtung nutfrei ausgebildet.

7. Elektrische Maschine (100) nach einem der vorherigen Ansprüche 1 bis 6, **dadurch gekennzeichnet, dass**
die Feder-Speicher-Einheit und/oder die Anlaufscheibe(n) (4) derart umfänglich oder radial über die Ankerwelle (17) hinausragt, dass diese in Axialrichtung (A) zwischen Kommutator-Ankereinheit und dem Kommutatorlager angeordnet ist/sind.

8. Elektrische Maschine (100) nach einem der vorherigen Ansprüche 1 bis 7, **dadurch gekennzeichnet, dass**
die Axialsicherungseinrichtung (80) in Axialrichtung (A) mindestens eine Breite (B) aufweist, die einem Abstand (D) zwischen Kommutator-Anker-Einheit und Kommutatorlager entspricht und bevorzugt im ursprünglichen Zustand breiter ist als der Abstand (D) zwischen Kommutator-Ankereinheit und Kommutatorlager.

9. Elektrische Maschine (100) nach einem der vorherigen Ansprüche 1 bis 7, **dadurch gekennzeichnet, dass**
die Axialsicherungseinrichtung (80) beabstandet zu der Feder-Speicher-Einrichtung, insbesondere an einer anderen Seite des Kommutatorlagers, ein Axialsicherungselement, insbesondere eine Sicherungsscheibe (51), aufweist.

10. Verfahren zur Herstellung einer elektrischen Maschine (100), insbesondere einer Andrehvorrichtung, nach einem der vorherigen Ansprüche 1 bis 9, zum Andrehen einer Brennkraftmaschine, umfassend eine Kommutator-Anker-Einheit mit einer daraus in Axialrichtung (A) hervorragenden Ankerwelle (17), die an ihrem einen Ende (17a) mittels eines Kommutatorlagers schwimmend gelagert ist, **dadurch gekennzeichnet, dass**
vor dem Einsetzen der Ankerwelle (17) in das Kommutatorlager eine in Axialrichtung (A) veränderbare Axialsicherungseinrichtung (80) auf der Ankerwelle (17) diese umgebend positioniert wird, um im zusammengebauten Zustand ein Axialspiel der Ankerwelle (17) zu verringern.
